# DEMANDE DE BREVET EUROPEEN

(11) **EP 0 609 152 A1**
(43) Date de publication de la demande: **03.08.1994**
(21) Numéro de dépôt: 94400181.7
(22) Date de dépôt: 27.01.1994
(51) Int. Cl.: B60R 9/058

(54) **Barre de toit pour véhicule automobile**

(30) Priorité: 28.01.1993 FR 9300882
(71) Demandeur: T.E.F., F-94380 Bonneuil Sur Marne (FR)
(72) Inventeur: Besnard, Jean, F-94430 Chennevieres Sur Marne (FR)
(74) Mandataire: Durand, Yves Armand Louis

(57) **Abrégé**

La présente invention concerne une barre de toit pour véhicule automobile.

Cette barre de toit comprend une barre (1) sur chaque extrémité de laquelle est monté coulissant un pied (5) comportant un tirant (7) qui est susceptible de s'accrocher sur un bord du toit et dont est solidaire un sabot (9) prenant appui sur le toit et muni d'une portée sphérique convexe (10) coopérant à la manière d'une rotule avec une portée sphérique concave (11) du pied (5) pour encaisser les efforts de la charge sur la barre (1).

Cette barre de toit s'applique à tout type de véhicule de tourisme ou même utilitaire.

## Description

La présente invention a essentiellement pour objet une barre de toit pour un véhicule automobile quelconque.

On connaît déjà des barres de toit comprenant d'une manière générale une barre sur chaque extrémité de laquelle est monté réglable et coulissant un pied comportant un tirant qui est susceptible de s'accrocher sur un bord du toit et dont est solidaire un sabot pouvant prendre appui sur ledit toit.

De telles barres présentent généralement une structure compliquée impliquant une multiplicité de pièces. En outre, ces barres connues ne permettaient pas toujours une fixation avec adaptation aisée et rapide sur le toit du véhicule, et ne permettaient pas non plus d'encaisser en les répartissant d'une manière idéale, les efforts de la charge sur la barre.

Aussi, la présente invention a pour but de remédier à ces inconvénients et de résoudre ces problèmes.

A cet effet, l'invention a pour objet une barre de toit pour véhicule automobile et du type comprenant une barre sur chaque extrémité de laquelle est monté coulissant un pied comportant un tirant qui est susceptible de s'accrocher sur un bord du toit et dont est solidaire un sabot prenant appui sur ledit toit, caractérisée en ce que le sabot et le pied comportent des portées coopérant à la manière d'une rotule pour encaisser les efforts de la charge sur la barre et réaliser l'adaptation du sabot sur le toit lors de la fixation des pieds sur la barre pour l'installer sur ledit toit.

Suivant une autre caractéristique de cette barre, le sabot comporte en partie supérieure une portée sensiblement sphérique convexe et le pied comporte en partie inférieure une portée sensiblement sphérique concave, ou l'inverse.

La barre selon cette invention est encore caractérisée en ce que le sabot est muni en partie inférieure d'un patin amovible formant cale d'épaisseur entre toit et sabot.

Selon une autre caractéristique de cette barre, la portée sensiblement sphérique du sabot est délimitée par deux butées opposées susceptibles de coopérer avec le pied, pour ainsi limiter le débattement lors de la rotulation.

Selon encore une autre caractéristique de l'invention, le sabot et le pied comportent sur leur face extérieure une encoche dans laquelle passe le tirant.

Le sabot peut être relié au tirant par un pion ou analogue traversant ce tirant et pénétrant dans un orifice ménagé dans l'encoche du sabot.

On précisera encore que le tirant est pourvu en partie haute d'un oeillet ou analogue traversé par une pièce en forme de manchon susceptible de recevoir une vis coopérant avec un écrou prévu à l'intérieur de la barre.

Le manchon précité peut recevoir un verrou amovible.

Suivant un mode de réalisation préféré, chaque pied se compose d'une partie supérieure tubulaire et d'une partie inférieure comportant la portée sphérique concave précitée, ainsi que d'une languette extérieure masquant en partie le tirant et retenant le pion précité.

Mais d'autres caractéristiques et avantages de l'invention apparaîtront mieux dans la description détaillée qui suit et se réfère aux dessins annexés, donnés uniquement à titre d'exemple, et dans lesquels .

La figure 1 est une vue en perspective éclatée d'une barre de toit conforme aux principes de l'invention.

La figure 2 est une vue en coupe verticale en position montée et passant par l'axe de la barre, de cette barre de toit.

En se reportant aux dessins, on voit une barre de toit pour véhicule automobile comprenant essentiellement une barre proprement dite 1 à l'intérieur de laquelle est fixé un élément formant écrou 2 et sur chaque extrémité de laquelle peut être fixé par une vis 3 manoeuvrable par un outil approprié quelconque 4, un pied 5 (un seul de ces pieds étant représenté sur les dessins), lequel pied 5 peut être emmanché par coulissement sur chaque extrémité de la barre 1.

A cet effet, le pied 5 comporte une partie supérieure tubulaire 6 comme cela est bien visible sur les dessins.

Sur le pied 5 peut être monté un tirant 7 revêtant la forme d'une plaque et dont l'extrémité libre 8 peut s'accrocher sur le bord ou la gouttière latérale du toit d'un véhicule automobile (non représenté). L'extrémité 8 du tirant 7 peut, à titre de protection, être recouverte d'un revêtement 8a en caoutchouc par exemple.

On a repéré d'une manière générale en 9 un sabot solidaire du tirant 7 et susceptible de prendre appui sur le toit du véhicule.

On comprend donc qu'en vissant les pieds 5 sur les extrémités de la barre 1, le tirant 7 de chaque pied viendra s'accrocher sur le bord ou la gouttière du toit du véhicule pour ainsi fixer la barre sur ledit toit, étant entendu que le sabot 9 prendra appui sur ce dernier, comme cela est bien connu en soi.

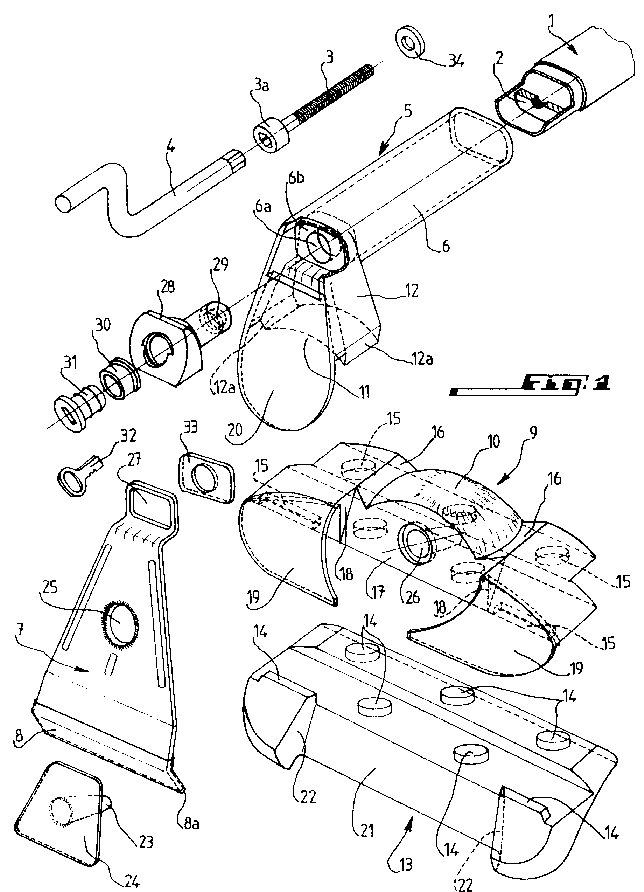

Conformément à l'invention, le sabot 9, comme on le voit bien sur la figure 1, est muni, à sa partie supérieure d'une portée sphérique convexe 10 qui coopère avec une portée sphérique concave 11 prévue en partie inférieure du pied 5. Cette portée sphérique concave 11 est réalisée dans un élément 12 faisant partie du pied 5 et s'étendant orthogonalement à la partie supérieure tubulaire 6.

On pourrait parfaitement, sans sortir du cadre de l'invention, prévoir, à l'inverse de ce qui est dit précédemment, une portée sphérique concave sur le sabot 9 et une portée sphérique convexe sur la pièce 12 du pied 5, sans pour cela sortir du cadre de l'invention.

Le sabot 9 peut être muni, sur sa partie inférieure, d'un patin amovible 13. Ce patin 13 comporte par exemple des ergots ou analogues 14 (figure 1) pouvant pénétrer dans des logements 15 prévus sous le sabot 9 pour assurer la retenue du patin. Ce dernier forme en quelque sorte une cale d'épaisseur entre le sabot et le toit du véhicule, étant bien entendu que le sabot 9 pourra recevoir un patin tel que 13 ayant une épaisseur et une forme variables, en fonction de la configuration du toit du véhicule sur lequel doit être fixée la barre. Autrement dit, la barre selon l'invention pourra convenir pour tout véhicule, quel qu'en soit le type, à la condition d'utiliser le patin approprié 13 qui pourra être en toute matière appropriée et être éventuellement recouvert d'une semelle en caoutchouc.

La portée sphérique convexe 10 du sabot 9 est délimitée par deux butées opposées 16 qui peuvent coopérer avec le pied 5, plus particulièrement avec les parties 12a de la pièce 12. Ainsi, comme on peut le comprendre en se reportant à la figure 1, le débattement de rotulation du sabot 9 sur la pièce 12 du pied 5 sera limité.

Le sabot 9 comporte sur sa face extérieure une encoche 17 délimitée par deux parois 18 entre lesquelles passe la plaque 7 formant tirant. Sur le devant de l'encoche 17, c'est-à-dire du côté extérieur au sabot 9 sont prévues deux platines 19 qui ont une fonction esthétique par le fait qu'elles présentent une forme qui est complémentaire de celle d'une languette 20 qui fait partie du pied 5, ladite languette 20 s'étendant au-delà de la portée sphérique concave 11 de la pièce 12.

Le patin 13, suivant l'exemple de réalisation représenté, comporte lui aussi, comme on le voit bien sur la figure 1, une encoche 21 délimitée par deux parois 22 qui prolongent en quelque sorte les parois 18 de l'encoche 17 du sabot 9. La plaque ou tirant 7 viendra par conséquent se loger aussi bien dans l'encoche 17 du sabot 9 que dans l'encoche 21 du patin 13.

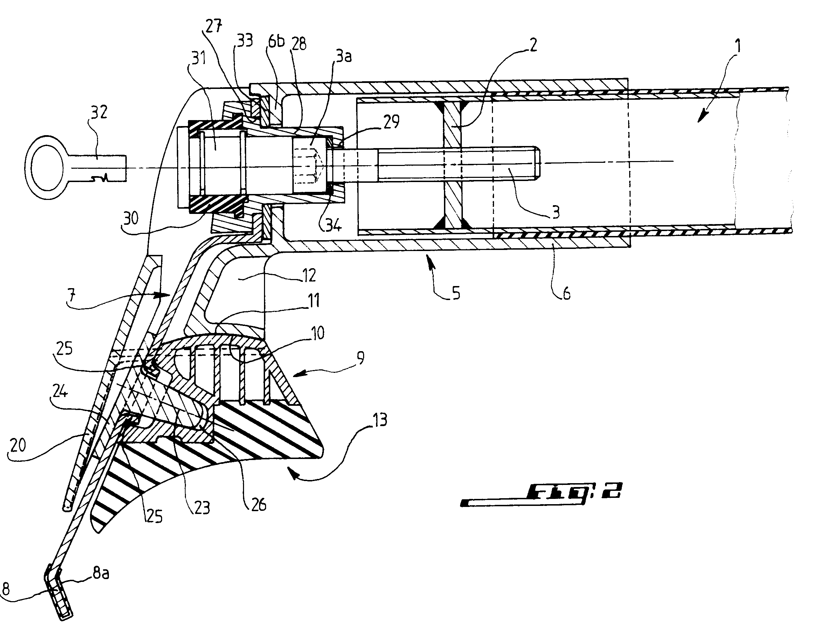

On a montré en 23 sur les figures 1 et 2 un pion ou analogue solidaire d'une platine 24 et pouvant passer au travers d'un orifice 25 ménagé dans le tirant 7 pour pénétrer dans un autre orifice 26 ménagé dans la face extérieure ou encoche 17 du sabot 9.

Le tirant 7 est muni en partie haute d'un oeillet 27 qui peut être traversé par une pièce 28 en forme de manchon et apte à recevoir la vis 3 susceptible de coopérer avec l'écrou 2 dans la barre 1. Le fond du manchon 28 comporte un trou 29 laissant le passage à la partie filetée de la vis 3 dont la tête 3a est retenue dans ledit manchon. A ce manchon 28 est associée une bague en matière plastique 30. L'ensemble manchon 28-bague 30 définit un logement pour un verrou 31 actionnable par une clé 32 et permettant l'interdiction ou non de l'accès à la vis 3, c'est-à-dire finalement le démontage ou non de la barre sur le toit du véhicule. Sur les figures 1 et 2, on a montré en 33 une rondelle interposée entre l'oeillet 27 du tirant 7 et une paroi 6b transversale à la partie tubulaire 6, et en 34 une autre rondelle interposée entre la tête 3a de la vis 3 et le fond du manchon 28.

Mais, pour une meilleure compréhension de l'invention, on décrira ci-après le montage de la barre qui vient d'être décrite ainsi que ses avantages.
Tout d'abord, on applique sous le sabot 9 le patin 13 correspondant au toit du véhicule sur lequel on veut fixer la barre.

Ensuite, on "enfile" le tirant 7 dans les encoches 21 et 17 du patin 13 et du sabot 9 respectivement, puis on introduit le pion 23 dans l'orifice 25 du tirant 7 et dans l'orifice 26 du sabot 9, de sorte que ledit sabot sera retenu sur le tirant.

Puis, on insère l'oeillet 27 du tirant 7 entre la languette 20 et la pièce 12 du pied 5, de façon que l'oeillet 27 se situe au droit de l'extrémité de la partie tubulaire 6. On observera ici que la languette 20 masque en partie le tirant 7 et retient le pion 23 par sa platine 24 interposée entre ledit tirant et ladite languette 20, comme on le voit bien sur la figure 2.

Le manchon 28 est alors introduit dans l'oeillet 27 et dans la partie tubulaire 6 par le trou 6a en bout de cette partie tubulaire.

Ensuite, l'extrémité de la barre 1 est introduite dans la partie tubulaire 6 du pied 5, et, après introduction de la vis 3 dans le manchon 28, on effectue le vissage de cette vis sur l'élément formant écrou 2 dans la barre 1.

Ce vissage permettra la rentrée plus ou moins profonde des extrémités de la barre 1 dans les parties tubulaires 6 de chaque pied 5, pour finalement aboutir à la fixation de ladite barre sur le toit du véhicule, étant entendu que les extrémités libres 8 des tirants 7 s'accrocheront sur le bord ou la gouttière du toit. On ajoutera que, sous l'effet du vissage, la languette 20 prendra appui sur la platine 24 solidaire du pion 23, de même que le tirant 7 tendra à prendre appui sur l'ensemble sabot 9-patin 13, de sorte que toutes ces pièces seront solidaires les unes des autres.

En fin de fixation, le verrou 31 pourra être introduit dans le manchon 28, de façon à rendre la barre indémontable.

Il est important d'observer ici que lors de la fixation de la barre sur le toit, c'est-à-dire lors du vissage de la vis 3, la rotule constituée par les portées sphériques 10 et 11 permettra une adaptation face contre face et idéale du sabot ou plus précisément du patin 13 sur le toit du véhicule.

En outre, la rotule précitée permettra avantageusement d'encaisser les efforts de la charge placée sur la barre 1.

Bien entendu, l'invention n'est nullement limitée au mode de réalisation décrit et illustré qui n'a été donné qu'à titre d'exemple.

C'est ainsi que les matières entrant en jeu pour la réalisation du pied, du sabot associé à ce pied et du patin associé au sabot peuvent être quelconques. De même, la forme particulière du sabot et du pied, en dehors de la question des portées sphériques que doivent comporter ces deux éléments, peut être quelconque.

C'est dire que l'invention comprend tous les équivalents techniques des moyens décrits ainsi que leurs combinaisons si celles-ci sont effectuées suivant son esprit.

## Revendications

1. Barre de toit pour véhicule automobile et du type comprenant une barre (1) sur chaque extrémité de laquelle est monté coulissant un pied (5) comportant un tirant (7) qui est susceptible de s'accrocher sur un bord du toit et dont est solidaire un sabot (9) prenant appui sur ledit toit, ledit sabot (9) et ledit pied (5) comportant des portées (10,11) coopérant à la manière d'une rotule pour encaisser les efforts de la charge sur la barre (1) et réaliser l'adaptation du sabot (9) sur le toit lors de la fixation des pieds (5) sur la barre (1) pour l'installer sur le toit, caractérisée en ce que la portée sensiblement sphérique (10) du sabot (9) est délimitée par deux butées opposées (16) susceptibles de coopérer avec le pied (5) et en ce que le sabot (9) étant muni en partie inférieure d'un patin amovible (13) formant cale d'épaisseur entre toit et sabot, ledit patin et ledit sabot comportent sur leur face extérieure une encoche (17,21) dans laquelle passe le tirant (7).

2. Barre selon la revendication 1, caractérisée en ce que le sabot (9) est relié au tirant (7) par un pion ou analogue (23) traversant ce tirant et pénétrant dans un orifice (26) ménagé dans l'encoche (17) du sabot (9).

3. Barre selon la revendication 1 ou 2, caractérisée en ce que le tirant (7) est pouvu en partie haute d'un oeillet (27) traversé par une pièce en forme de manchon (28) susceptible de recevoir une vis (3) coopérant avec un écrou (2) prévu à l'intérieur de la barre (1), ledit manchon recevant un verrou amovible (31).

4. Barre selon l'une des revendications précédentes, caractérisée en ce que le pied (5) se compose d'une partie supérieure tubulaire (6) et d'une partie inférieure comportant la partie sphérique concave précitée (11), ainsi que d'une languette extérieure (20) masquant en partie le tirant (7) et retenant le pion précité (23).
